# EUROPÄISCHE PATENTSCHRIFT

(11) **EP 2 588 283 B1**
(45) Veröffentlichungstag und Bekanntmachung des Hinweises auf die Patenterteilung: **03.09.2014**
(21) Anmeldenummer: 11730222.4
(22) Anmeldetag: 04.07.2011
(51) Int. Cl.: B26F 1/28, C03C 23/00, C03B 21/04, C03B 21/06, C03B 25/02

(54) **VERFAHREN ZUR SPANNUNGSARMEN HERSTELLUNG VON GELOCHTEN WERKSTÜCKEN**
METHOD FOR PRODUCING PERFORATED WORKPIECES IN A STRESS-RELIEVING MANNER
PROCÉDÉ DE FABRICATION À FAIBLES TENSIONS DE PIÈCES PERFORÉES

(30) Priorität: 02.07.2010 DE 102010025965
(43) Veröffentlichungstag der Anmeldung: 08.05.2013
(73) Patentinhaber: Schott AG, 55122 Mainz (DE)
(72) Erfinder: NATTERMANN, Kurt, 55437 Ockenheim (DE); PEUCHERT, Ulrich, 55294 Bodenheim (DE)
(74) Vertreter: Herden, Andreas F.
(86) Internationale Anmeldenummer: PCT/EP2011/003298
(87) Internationale Veröffentlichungsnummer: WO 2012/000683

(56) Entgegenhaltungen:
- WO-A1-2009/059786
- GB-A- 248 403
- US-A1- 2008 047 935

## Beschreibung

Die Erfindung bezieht sich auf ein Verfahren zur spannungsarmen Herstellung von gelochten Werkstücken aus Glas, Glaskeramik oder Halbleitern.

Folien oder dünne Platten aus dielektrischen Materialien, beispielsweise aus Kunststoffen, Halbleitern oder Gläsern, können dadurch perforiert werden, dass Löcher in dem Dielektrikum durch lokale elektrothermische Aufheizung bis zum Verdampfen des Materials entstehen. An den Perforationsstellen erfolgt eine lokale Aufheizung des Materials, um die Durchschlagfeldstärke lokal abzusenken. Wenn dann an dem Material ein elektrisches Hochspannungsfeld mit geeigneter Frequenz oder Impulsform angelegt wird, erfolgt ein Durchschlag, und es fließt ein elektrischer Strom durch das Material. Falls das Material eine ausreichend starke Zunahme der elektrischen Leitfähigkeit von der Temperatur aufweist, wie es bei Halbleitern, Gläsern, Glaskeramiken und vielen Kunststoffen der Fall ist, entsteht in dem Material eine "elektrothermische Selbstfokussierung" des Durchschlagkanals: Wo das Material heißer ist, nimmt auch die Stromdichte zu und heizt das Material lokal weiter, bis es verdampft und der Dampf gewissermaßen die Perforation "freibläst".

Die Dokumente US 2008/0047935 A1, WO 2009/059786 A1 und WO 2009/074338 A1 beschreiben die Herstellung von Perforationen durch elektrisch isolierende Substrate, indem der prospektierten Lochungsstelle gezielt Wärmeenergie zugeführt wird und ein elektrisches Feld angelegt wird, um einen Stromfluss zu bewirken, der durch ein strom- und leistungsmodellierendes Element bestimmt wird. Eine Erwärmung des Werkstückes insgesamt erfolgt nicht.

Aus GB 248 403 A ist Vorheizen von Glas auf 400° bis 500°C vor dem Perforieren bekannt, was durch Elektrodenpaare erfolgt, die mit Wechselspannung beaufschlagt werden, um das Glas im Perforationsbereich zu schmelzen. Daraufhin wird eine der Elektroden durch das Glas gedrückt, um die gewünschte Perforation zu bilden. Das perforierte Glas wird wärmebehandelt, um Spannungen wegen des Perforierens zu beseitigen.

Aus DE 10 2007 062 979 A1 ist ein Verfahren zur Herstellung eines Glasgegenstandes mit verbesserter Thermoschockfestigkeit bekannt, nämlich einer Glasscheibe als Innenscheibe eines Gargerätes. Eine solche wannenförmig ausgebildete Glasscheibe wird direkt im Anschluss an ihre Formgebung oberflächlich auf ihrer Außenseite auf eine Temperatur im Bereich des Erweichungspunktes oder darüber hinaus rasch erwärmt, indem die betreffende Oberfläche mittels einer lokalen Heizquelle überstrichen wird. Zur Nachbehandlung der aufgeheizten Glasscheibe wird diese einem langsamen Abkühlungs- und Nachwärmeprozess in einem Kühlofen unterworfen.

Wenn Werkstücke aus Glas oder glasähnlichen Materialien elektrothermisch perforiert werden, können sehr hohe Spannungszustände im Bereich der Lochränder auftreten. Abhängig von der Geometrie des Werkstückes (Größe und Muster der Löcher, Dicke und Ausdehnung des Werkstückes) sowie der Art des Glases können schädliche Zugspannungen von 50 MPa und mehr entstehen, gern auch vergesellschaftet mit schädlichen tangentialen Zugspannungen. Wenn im Werkstück der Abstand der Löcher sehr klein sein muss, ist die Gefahr der Verformung, des Splitterns oder des Reißens solcher Werkstücke besonders groß, vor allem, wenn weitere Bearbeitungsschritte nachfolgen, beispielsweise die Werkstücke beschichtet werden sollen.

Der Erfindung liegt deshalb die Aufgabe zugrunde, ein Verfahren zur spannungsarmen Herstellung von gelochten Werkstücken aus Glas, Glaskeramik oder Halbleitern anzugeben, die elektrothermisch perforiert werden.

Gemäß Erfindung wird das zu lochende Werkstück in einen Bereich nahe der Transformationstemperatur erwärmt, bei der das Material des Werkstücks weich wird, jedoch nicht so lange in diesem Temperaturbereich gehalten wird, dass die Gefahr der Formveränderung des Werkstücks auftreten würde. Basierend auf einem elektrischen Hochspannungsfeld geeigneter Frequenz oder Impulsform wird das Werkstück perforiert. Bei diesem Vorgang fließt zunehmend ein elektrischer Strom, der das Lochmaterial erhitzt und verdampfen lässt. Das gelochte Werkstück, welches im Randbereich der Perforationen eine höhere Temperatur als in sonstigen Bereichen aufweist, wird nunmehr so langsam abkühlen lassen, dass die durch den Perforationsprozess bedingten mechanischen Spannungen relaxieren.

Der Schritt des Abkühlens kann auch nach Art des Pendelglühens erfolgen, bei dem das gelochte Werkstück wieder erhitzt wird, bevor es auf Raumtemperatur abgekühlt wird. Die Wiedererhitzung erfolgt zweckmäßig bis in einen Temperaturbereich um die Transformationstemperatur des Materials des Werkstücks.

Mit der Erfindung wird erreicht, dass die Bildung von thermisch induzierten Spannungszuständen weitgehend umgangen wird bzw. bereits gebildete Spannungszustände verringert oder sogar zum Verschwinden gebracht werden.

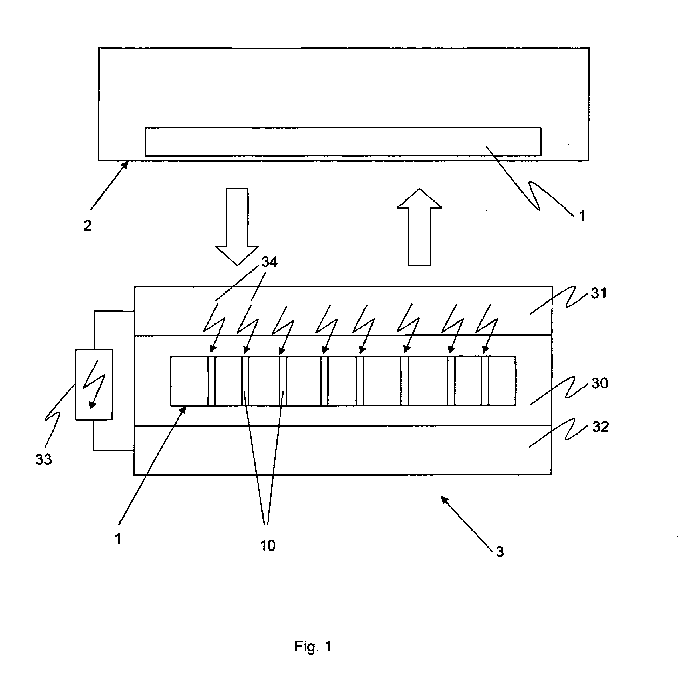

Die Erfindung wird anhand der Zeichnung beschrieben. Diese zeigt schematisch den Ablauf der Erzeugung von gelochten Werkstücken.

Ein plattenförmiges Werkstück 1 aus Glas, Glaskeramik oder aus einem Halbleiter wird in einen Ofen 2 verbracht, um dort auf eine Temperatur nahe der Transformationstemperatur des Materials des Werkstücks aufgeheizt zu werden. Bei der Transformationstemperatur wird das Material weich, ohne dass jedoch das Werkstück in der Kürze der Verweilzeit bei dieser Temperatur seine Form verliert. Man bewegt sich in einem Viskositätsbereich zwischen 10¹² bis 10¹⁴ decipascal.s, d.h. in einem Bereich knapp unterhalb bis knapp oberhalb der Transformationstemperatur.

Das so thermisch vorbehandelte Werkstück 1 wird in eine Perforationsapparatur 3 verbracht, die einen Bearbeitungsraum 30 sowie Elektroden und Gegenelektroden 31, 32 aufweist. Ein Hochspannungsgenerator 33 erregt die Elektroden 31, 32 derart, dass das Werkstück 1 einem elektrischen Hochspannungsfeld mit geeigneter Frequenz oder Impulsform unterliegt. Das Hochspannungsfeld macht sich an einzelnen Stellen bemerkbar, die durch Pfeile 34 markiert sind. An diesen Stellen übersteigt das Hochspannungsfeld die Durchschlagfestigkeit des Materials des Werkstücks 1, so dass ein elektrischer Strom quer durch das Werkstück fließt, der das Material örtlich aufheizt, wodurch sich der Strom verstärkt und die erzeugte Wärme zunimmt, bis das Material an diesen Stellen verdampft. Es werden einzelne Löcher 10 sozusagen freigeblasen. Diese Löcher 10 entstehen im Wesentlichen senkrecht zur Werkstückoberfläche und weisen annähernd zirkulare Kontur auf.

Nach Herstellung der Löcher 10 wird das Werkstück 1 in den Ofen 2 zurück verbracht, der nunmehr als Kühlofen betrieben wird. Die Abkühlungsrate ist derart, dass die mechanischen Spannungen, welche durch den Perforationsprozess erzeugt worden sind, relaxieren. Die Abkühlungsrate kann im Bereich von -0,5 bis -5°C/min liegen. Bei Werkstücken aus Glas wird eine Abkühlungsrate mit etwa -2°C/min im Temperaturbereich nahe der Transformationstemperatur bevorzugt. Im Temperaturbereich fernab von der Transformationstemperatur kann eine raschere Abkühlung betrieben werden, weil die Spannungsrelaxion bereits eingetreten ist. Im Falle von alkalifreiem oder alkaliarmem Glas liegt die Transformationstemperatur bei etwa 700°C. Es wird mit einer Aufwärmtemperatur in einem Bereich von 650°C bis 730°C gearbeitet.

Nach einer Weiterbildung der Erfindung kann der Ofen 2 als Pendelglühofen betrieben werden. Dies bedeutet, dass man das gelochte Werkstück erneut bis in einen Bereich nahe der Transformationstemperatur aufheizt und erneut abkühlen lässt, so dass vollständige Relaxion des Werkstücks erwartet werden kann.

## Patentansprüche

1. Verfahren zur spannungsarmen Herstellung von gelochten Werkstücken aus Glas, Glaskeramik oder Halbleitern, mit folgenden Schritten:
a) Bereitstellen des zu lochenden Werkstückes, welches die Eigenschaft hat, eine Transformationstemperatur aufzuweisen, bei welcher das Material des Werkstücks weich wird;
b) vor Schritt c) Erwärmen des gesamten Werkstücks bis in einen Bereich nahe der Transformationstemperatur wobei die Erweichung des Werkstücks bis in einen Viskositätsbereich zwischen 10¹² und 10¹⁴ decipascal.s getrieben wird;
c) Perforieren des Werkstücks, basierend auf einem elektrischen Hochspannungsfeld geeigneter Frequenz oder Impulsform, bei welcher an der zu perforierenden Stelle zunehmend ein elektrischer Strom fließt, der das Lochmaterial erhitzt und verdampfen lässt;
d) Abkühlen des gelochten Werkstücks vom Transformationstemperaturbereich auf Raumtemperatur mit einer Rate, bei der die durch den Perforationsprozess erzeugten mechanischen Spannungen relaxieren.

2. Verfahren nach Anspruch 1, wobei Erwärmen und Abkühlen des Werkstückes in einem Ofen (2) erfolgt.

3. Verfahren nach Anspruch 1 oder 2, wobei die Abkühlungsrate im Bereich von -0,5 bis -5°C/min liegt.

4. Verfahren nach Anspruch 3, wobei die Abkühlungsrate für gelochte Glasplättchen als Werkstücke bei -2°C/min ± 50 % während der Abkühlung nahe des Transformationstemperaturbereichs liegt.

5. Verfahren nach einem der Ansprüche 1 bis 4,
wobei bei Werkstücken aus alkalifreien oder alkaliarmen Gläsern mit einer Aufwärmtemperatur in einem Bereich von 650°C bis 730°C gearbeitet wird.

6. Verfahren nach einem der Ansprüche 1 bis 5,
wobei im Schritt d) das gelochte Werkstück wiedererhitzt wird, bevor es auf Raumtemperatur abgekühlt wird.

7. Verfahren nach Anspruch 6,
wobei die Wiedererhitzung bis in einen Bereich nahe der Transformationstemperatur des Materials des Werkstücks erfolgt.

## Claims

1. Method for producing perforated work pieces from glass, glass ceramics, or semiconductors in a low-stress manner, comprising the following steps:
a) providing the work piece to be perforated, which has the property of comprising a transformation temperature at which the material of the work piece softens;
b) prior to step c), heating the whole work piece up to a range close to the transformation temperature, the softening of the work piece being effected into a viscosity range between 10¹² and 10¹⁴ dPa·s;
c) perforating the work piece on the basis of a high-voltage electric field of a suitable frequency or pulse shape, wherein an electric current increasingly flows at the location to be perforated, which current heats the material to be perforated and causes it to evaporate;
d) cooling the perforated work piece from the transformation temperature range to room temperature at a rate at which the mechanical stresses generated by the perforation process relax.

2. Method as claimed in claim 1, wherein the heating and cooling of the work piece are effected in a furnace (2).

3. Method as claimed in claim 1 or 2, wherein the cooling rate is in the range from -0.5 to -5°C/min.

4. Method as claimed in claim 3, wherein the cooling rate for perforated glass plates as work pieces is -2°C/min ± 50% during cooling close to the transformation temperature range.

5. Method as claimed in any one of claims 1 to 4, wherein, in the case of work pieces made of alkali-free or low-alkali glasses, work is carried out at a heating temperature in a range from 650°C to 730°C.

6. Method as claimed in any one of claims 1 to 5, wherein, in step d) the perforated work piece is reheated before it is cooled to room temperature.

7. Method as claimed in claim 6, wherein the reheating takes place up to a range close to the transformation temperature of the material of the work piece.

## Revendications

1. Procédé de fabrication de pièces perforées à faibles contraintes, en verre, vitrocéramique ou en matériaux semi-conducteurs, comprenant les étapes suivantes :
a) préparation de la pièce à perforer ayant la propriété de présenter une température de transformation à laquelle le matériau de la pièce est ramolli ;
b) préalablement à l'étape c), chauffage de l'ensemble de la pièce dans une plage de température proche de la température de transformation, le ramollissement de la pièce étant effectué jusqu'à une plage de viscosité entre 10¹² et 10¹⁴ dPas ;
c) perforation de la pièce, au moyen d'un champ électrique haute tension de fréquence ou de forme d'impulsion appropriée, où un courant électrique circule contre l'emplacement à perforer, lequel chauffe et fait évaporer le matériau à perforer ;
d) refroidissement de la pièce perforée de la plage de température de transformation à la température ambiante, à une vitesse à laquelle les contraintes mécaniques générées par le processus de perforation sont détendues.

2. Procédé selon la revendication 1, où le chauffage et le refroidissement de la pièce ont lieu dans un four (2).

3. Procédé selon la revendication 1 ou 2, où la vitesse de refroidissement est comprise entre -0,5 et -5°C/min.

4. Procédé selon la revendication 3, où la vitesse de refroidissement est de -2°C/min ± 50 % pour des plaquettes de verre perforées en tant que pièces pendant le refroidissement proche de la plage de température de transformation.

5. Procédé selon l'une des revendications 1 à 4, où les pièces en verre faiblement alcalin ou non alcalin sont travaillées avec une température d'échauffement comprise entre 650°C et 730°C.

6. Procédé selon l'une des revendications 1 à 5, où, en étape d), la pièce perforée est recuite avant d'être refroidie à température ambiante.

7. Procédé selon la revendication 6, où le recuit est effectué dans une plage de température proche de la température de transformation du matériau de la pièce.
